# EUROPEAN PATENT SPECIFICATION

(11) **EP 1 270 339 B1**
(45) Date of publication and mention of the grant of the patent: **16.03.2005**
(21) Application number: 02009232.6
(22) Date of filing: 25.04.2002
(51) Int. Cl.: B60R 21/20

(54) **Vehicle occupant protection device**
Schutzvorrichtung für Fahrzeuginsassen
Système de protection de passager de véhicule

(30) Priority: 30.05.2001 JP 2001162833
(43) Date of publication of application: 02.01.2003
(73) Proprietor: TAKATA CORPORATION, Minato-ku, Tokyo 106-8510 (JP)
(72) Inventor: Hayashi, Shinji, Minato-ku, Tokyo 106-8510 (JP)
(74) Representative: Banzer, Hans-Jörg, Dipl.-Ing.

(56) References cited:
- US-A- 5 398 959
- PATENT ABSTRACTS OF JAPAN vol. 1999, no. 09, 30 July 1999 (1999-07-30) & JP 11 115670 A (TOYO TIRE &RUBBER CO LTD; TOYOTA MOTOR CORP), 27 April 1999 (1999-04-27)
- PATENT ABSTRACTS OF JAPAN vol. 1995, no. 09, 31 October 1995 (1995-10-31) & JP 07 156738 A (INOAC CORP), 20 June 1995 (1995-06-20)

## Description

### [Industrial Field of the Invention]

The present invention relates to a vehicle occupant protection device and more particularly to a vehicle occupant protection device suitably used as a leg protection device for protecting the vehicle occupant's legs from colliding with a vehicle member such as an interior panel in front of a vehicle seat in the event of a vehicle collision.

### [Related Art]

As a vehicle occupant protection device for protecting a vehicle occupant from colliding with an interior panel in the event of a collision of a vehicle such as an automobile, there is a protection device comprising mainly an airbag installed inside the interior panel (in a space behind the interior panel), a gas generator for inflating the airbag, and a cover for covering the airbag in the normal state (when the vehicle such as an automobile is not in a collision).

In the aforementioned vehicle occupant protection device, the airbag is folded and accommodated inside the interior panel and the cover is disposed to cover the folded airbag.

In the event of a vehicle collision, the gas generator is actuated to spout out gas. The gas is supplied into the airbag so as to rapidly inflate the airbag. According to the inflation of the airbag, the cover is opened so as to allow the airbag to expand out of the interior panel. Therefore, the airbag is inflated and deployed between the interior panel and a vehicle occupant, thereby protecting the vehicle occupant from colliding with the interior panel.

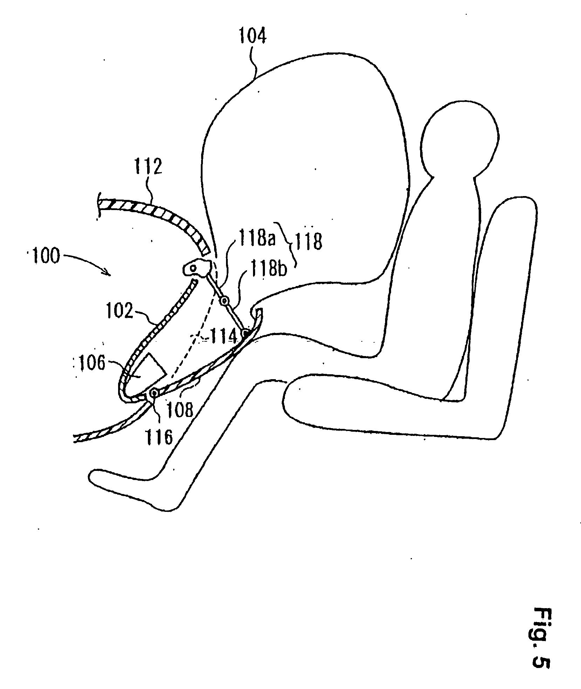

An example of the vehicle occupant protection device of this type will now be described with reference to Fig. 5. Fig. 5 is a sectional view of a structural example of a vehicle occupant protective device for a front passenger installed in an automobile and showing this vehicle occupant protection device in a state that its airbag is inflated.

The vehicle occupant protection device 100 of an automobile comprises a container-like retainer 102 having an opening formed in its front face (confronting a vehicle occupant), an airbag 104 which is folded and accommodated in the retainer 102, a gas generator 106 for inflating the airbag 104, and a cover door 108 which covers the opening formed in the front face of the retainer 102 and opens when the airbag 104 is inflated. The cover door 108 is pivotally supported at its lower edge by a hinge 116. In the normal state, the cover door 108 is arranged to be substantially flush with an interior panel 112 and closes the opening 114.

In the vehicle occupant protection device 100, the gas generator 106 is actuated to spout out gas in the event of a vehicle collision. The airbag 104 is inflated by the gas from the gas generator 106 so as to push up and open the cover door 108 so that the airbag 104 is deployed in front of the vehicle occupant, thereby receiving the upper half of the vehicle occupant.

The cover door is backed by the airbag 104 and is positioned in front of the knees of the vehicle occupant, thereby preventing the lower legs of the vehicle occupant from colliding with the interior panel 112. That is, as the airbag 104 is inflated, the cover door 108 is pushed out toward the vehicle occupant by gas pressure during inflation of the airbag 104 and comes in contact with the knees of the vehicle occupant. Therefore, load locally applied by the knees of the vehicle occupant is dispersed by the cover door 108 and is then transmitted to the airbag 104, whereby the airbag 104 effectively absorbs load from the vehicle occupant and receives and stops the lower legs of the vehicle occupant.

An upper portion of the cover door 108 is connected to the retainer 102 by a connecting member 118, thereby preventing the cover door 108 from excessively projecting toward the vehicle occupant or from coming off by the rapid inflation of the airbag 104.

### [Problems to be resolved by the Invention]

In the aforementioned vehicle occupant protection device 100, the connecting member 118 as pivotal movement limiting means of the cover door 108 comprises two rods 118a, 118b, wherein one ends of the rods 118a, 118b are pivotally connected, the other end of one rod 118a is pivotally connected to the retainer 102, and the other end of the other rod 118b is pivotally connected to the cover door 108. This structure increases the number of parts and thus increases the cost. In the normal state, the pair of the rods 118a, 118b of the connecting member 118 is closed in V-like shape. During assembly, a part of the airbag may be caught between the rods 118a and 118b in a step of closing the rods 118a, 118b. Accordingly, the device has bad assembling operability.

Further, since the connecting member 118 is located near the upper edge of the cover door 108, the airbag 104 should expand from the bottom side so as to be easily caught by the connecting member 118.

From Patent Abstracts of Japan, vol. 1999, no. 09, 30 July 1999, & JP 11115670 A, a vehicle occupant protection device according to the preamble of independent claim 1 is known. In particular, this document discloses a vehicle occupant protection device designed to prevent an airbag door from being brought into contact with a peripheral member such as a windshield. According to this document, a regulating arm is integrally formed on the back surface of an airbag door, and a slit shaped guide part is provided for the regulating arm, the slit shaped guide part guiding an engaging projection fixedly provided for an airbag case.

From Patent Abstracts of Japan, vol. 1995, no. 09, 31 October 1995, & JP 07156738 A, another vehicle occupant protection device is known, which comprises an opening adjusting structure of an airbag door. In particular, this opening adjusting structure comprises an opening adjusting member having a circular groove part corresponding to the rotational locus of the airbag door. This circular groove part is provided around a hinge part from the closing to the opening on a side part of the airbag door in an integrated manner. The opening adjusting member not only restricts the movement of the hinge part of the airbag door, but it also comprises a frictional resistance part where the width of the groove part becomes partially narrower. This frictional resistance part reduces the opening speed of the airbag door.

It is an object of the present invention to solve the aforementioned problems and to provide a vehicle occupant protection device the structure of which is simple and which can be easily assembled, and allows extremely smooth inflation of the airbag.

### [Means to Solve the Problems]

According to the present invention, this object is achieved by a vehicle occupant protection device according to claim 1. The dependent claims define preferred and advantageous embodiments of the invention.

The vehicle occupant protection device of the present invention comprises: an airbag disposed inside a vehicle member in front of a seat of a vehicle; a gas generator for inflating the airbag; a cover defining a door which covers the airbag and is disposed to be substantially flush with said vehicle member and which opens toward a vehicle occupant with its one side functioning as a hinge member when the airbag is inflated so as to produce an opening in said vehicle member through which the airbag passes; and a limiting means for limiting the opening angle of the door, wherein said limiting means is composed of stoppers which come in contact with rear surfaces of edge portions of the cover near the peripheral edge of said opening when the door is opened by a predetermined angle, and said stoppers are disposed on side wall portions of the door extending in a direction perpendicular to the hinge portion of said door.

In the vehicle occupant protection device, when the door is opened by the inflated airbag, the stoppers come in contact with the rear surfaces of portions near the peripheral edge of said opening, thereby preventing the door from further opening.

The stoppers are disposed on the door and thus can be easily formed integrally, for example, by molding of synthetic resin.

In the present invention, each of the stoppers comprises a plate portion which projects laterally from said door and can come in contact with the rear surface of the portion near the peripheral edge of said opening; and a rib portion supporting the plate portion. According to the stopper, the strength and rigidity of the stopper can be variously set by suitably selecting the sizes of the plate portion and the rib portions and the number of the rib portions.

The vehicle occupant protection device of the present invention is extremely suitable for use as a leg protection device for protecting a vehicle occupant's legs by the inflated airbag, and can be used as an airbag device for protecting a front passenger or a rear passenger.

### [Brief Explanation of the drawings]

Fig. 1 is a sectional view showing a leg protection device for a front passenger of an automobile according to an embodiment of the present invention.
Fig. 2 is a perspective view of a cover of the protection device shown in Fig. 1.
Figs. 3(a)-3(c) are illustrations for explaining the cover of the protection device shown in Fig. 1.
Fig. 4(a) is a sectional view showing the installation of the protection device, and Fig. 4(b) is a sectional view of the protection device in a state in which its airbag is inflated.
Fig. 5 is a sectional view of a vehicle occupant protection device according to a , conventional example in a state in which its airbag is inflated.

### [Embodiments for carrying out the Invention]

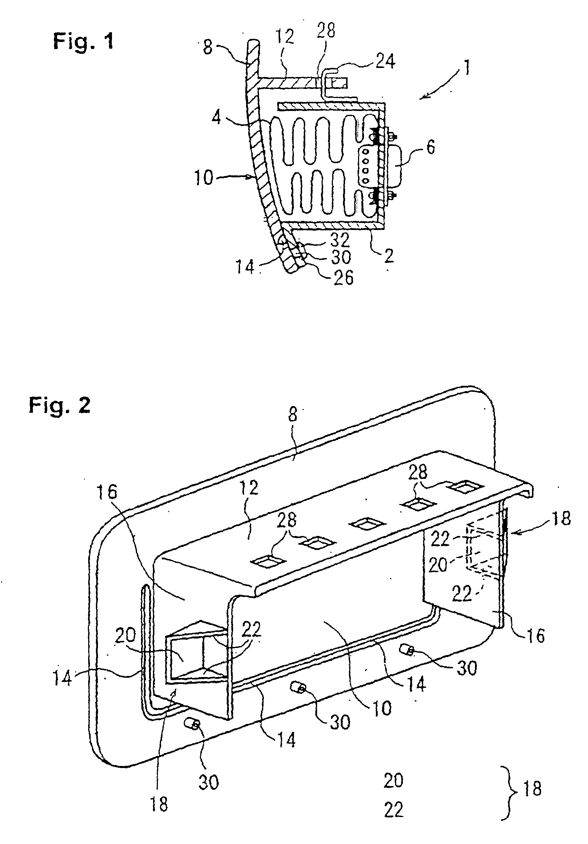

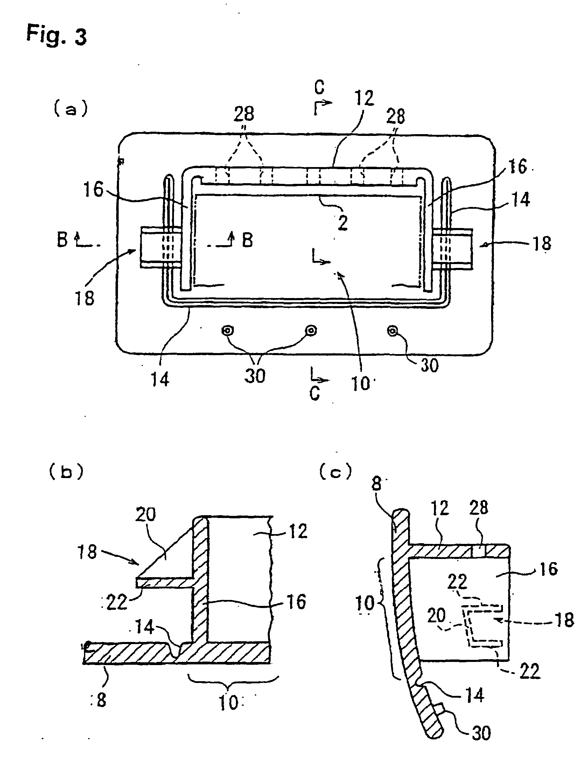

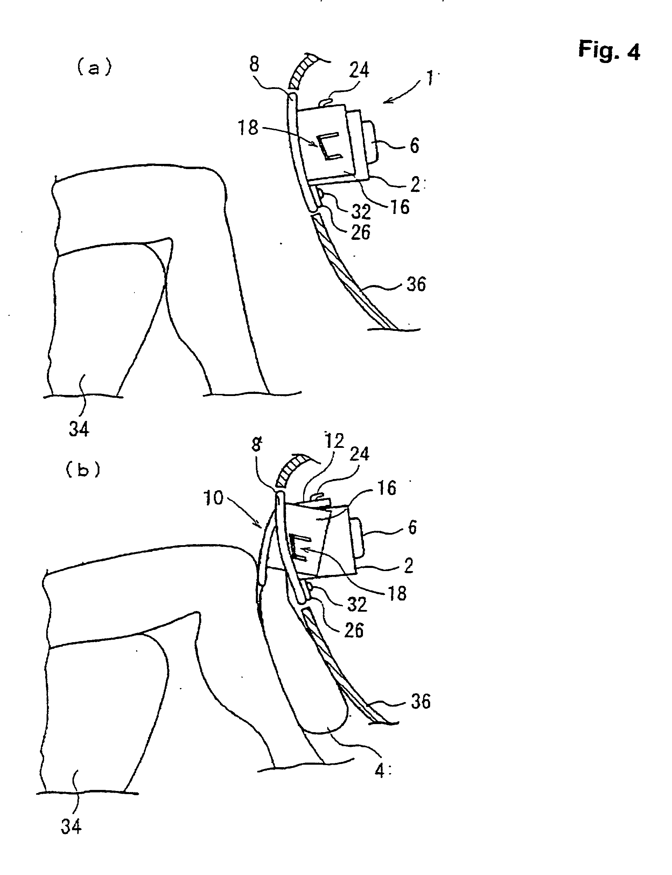

Hereinafter, embodiments of the present invention will be described with reference to the attached drawings. Fig. 1 is a sectional view showing a leg protection device for a front passenger of an automobile according to an embodiment of the present invention, Fig. 2 is a perspective view of a cover of the protection device, Fig. 3(a) is a plane view of the cover, Fig. 3(b) is a sectional view taken along a line B-B of Fig. 3(a), Fig. 3(c) is a sectional view taken along a line C-C of Fig. 3(a), Fig. 4(a) is a sectional view showing the installation of the protection device in the normal state, and Fig. 4(b) is a sectional view of the protection device in a state that its airbag is inflated.

This leg protection device 1 for a front passenger of an automobile comprises a container-like retainer 2 having an opening formed in its front face (confronting a vehicle occupant), an airbag 4 which is folded and accommodated in the retainer 2, a gas generator 6 for inflating the airbag 4; and a cover 8 covering the opening of the retainer 2. A part of the cover 8 is defined as a door 10 which opens when the airbag 4 is inflated. The cover 8 is attached to the retainer 2 in such a manner as to overlap the door 10 with the opening of the retainer 2.

The cover 8 has a wall portion 12 disposed on the rear surface thereof to extend laterally along the upper edge of the door 10 and a groove-like tear line (split-accelerator) 14 formed in the rear surface thereof to extend along the lower edge, the left- and right-side edges of the door 10. As the airbag 4 is inflated by the gas from the gas generator 6, the door 10 is pushed up by the gas pressure during inflation of the airbag 4, whereby the tear line 14 is torn along the lower edge and the left- and right-side edges of the door 10. Then, the door 10 is bent along its upper edge. At this point, the comer defined by the door 10 and the wall portion 12 functions as a hinge portion so that the door 10 under the hinge portion opens toward a vehicle cabin.

It is preferable that portions of the tear line 14 extending along the left- and right-side edges of the door 10 have a groove depth greater than that of a portion of the tear line 14 extending along the lower edge of the door 10. According to this structure, the tear line 14 may be extremely smoothly torn from the lower edge of the door 10 to the left- and right-side edges of the door 10.

The door 10 is provided with a pair of side wall portions 16 on its rear surface to extend vertically along the left- and right-side edges of the door 10. Each side wall portion 16 has a stopper 18 for limiting the opening angle of the door 10 during the inflation of the airbag 4. Each stopper 18 is formed on the outer side surface of each side wall portion 16 to project laterally and comprises a plate portion 20 which can come in contact with a rear surface of an edge portion around the door 10 of the cover 8 when the door 10 opens to the front of the cover 8 and rib portions 22 supporting the plate portion 20. The plate portion 20 is located a predetermined distance apart from the rear surface of the cover 8 in the standing direction of the side wall portion 16.

Corresponding to conditions such as the output of the gas generator 6, the strength and rigidity of the stopper 18 can be variously set by suitably selecting the sizes of the plate portion 20 and the rib portions 22 and the number of the rib portions 22.

When the airbag 4 is inflated and the door 10 thus opens to the front of the cover 8, the side wall portions 16 are brought to the front side of the cover 8 together with the door 10. The stoppers 18 move toward the rear surface of the cover 8 together with the side wall portions 16. As the stoppers 18 move the predetermined distance, the plate portions 20 come in contact with the rear surface of the cover 8, thereby stopping the door 10 from further opening. The opening angle of the door 10 is thereby limited.

As the door 10 is opened by the predetermined opening angle, the airbag 4 is deployed to the front of the cover 8 from a frame-like opening surrounded by the door 10 and the left and right side wall portions 16 and is guided by the door 10 to expand downwardly. During this, the lateral expansion of the airbag 4 is limited by the left and right side wall portions 16 projecting in front of the cover 8.

By the way, the retainer 2 is provided on its upper surface with hooks 24 for the connection with the cover 8. In addition, the retainer 2 is provided at the lower edge of the opening thereof with a lug (or flange) 26 to be fixed to the cover 8. The lug 26 is formed in an outward collar-like shape projecting from the lower edge of the opening of the retainer 2 such that the lug 26 is superposed on a rear surface of a portion just below the door 10 of the cover 8. The lug 26 has small holes formed therein.

The wall portion 12 is provided with holes 28 with which the hooks 24 can engage. Cylindrical pins 30 capable of penetrating the holes of the lug 26 are formed on the rear surface of he portion just below the door 10 of the cover 8 on which the lug 26 is superposed.

For mounting the cover 8 to the retainer 2, the hooks 24 on the upper surface of the retainer 2 are inserted into the holes 28 from below the wall portion 12 to engage with the holes 28. Then, the opening of the retainer 2 is superposed on the door 10 and the lug 26 below the opening of the retainer 2 is superposed on the rear surface of the portion just below the door 10 of the cover 8.

During this, the pins 30 penetrate the small holes of the lug 26, thereby achieving the alignment between the retainer 2 and the cover 8. After that, vises 32 are screwed into central bores of the pins 30, thereby securing the lug 26 to the cover 8. (It should be noted that the lug 26 may be secured to the cover 8 by heating to melt the ends of the pins 30 to have greater end portions.) Therefore, the cover 8 is fixed to the retainer 2, thereby achieving the mounting of the cover 8.

The protection device 1 having the aforementioned structure is inserted through a device mounting opening formed in an interior panel 36 in front of a front passenger seat 34 and secured to a vehicle member (not shown) by securing means such as a bracket (not shown), whereby the protection device 1 is installed inside an interior panel 36 (a space behind the interior panel 36). The device mounting opening is located almost at the same height level as the knees of a vehicle occupant in the front passenger seat. The cover 8 of the protection device 1 is disposed to close the device mounting opening in such a manner as to be flush with the interior panel 36 in the normal state.

In the event of a vehicle collision, the gas generator 6 is actuated to spout out gas and the airbag 4 starts to be inflated by the gas from the gas generator 6 to push and open the door 10 of the cover 8 so that the airbag 4 expands out to the front side of the interior panel 36. At this point, the door 10 opens by the predetermined angle because its opening angle is limited by the stoppers 18 so that the airbag 4 is guided by the door 10 to expand downward along the interior panel 36. Therefore, the airbag 4 is inflated and deployed in a range from the vicinity of the knees to the leg portions under the knees of the vehicle occupant, thereby protecting the lower legs of the vehicle occupant from colliding with the interior panel 36.

As the door 10 is opened due to the inflation of the airbag 4, the left and right side wall portions 16 are brought to the front side of the cover 8 together with the door 10. The side wall portions 16 project just like walls from the front face of the cover 8 so as to guide the airbag 4 being inflated at the both lateral sides. Therefore, the airbag 4 is prevented from excessively inflated in the lateral direction of the airbag 4, whereby the airbag 4 can be smoothly inflated and deployed to the front side of the interior panel 36.

In this protection device 1, since the side wall portions 16 and the stoppers 18 are both disposed on the door 10, these can be integrally formed, for example, by molding of synthetic resin. This extremely simplifies the structure of the protection device 1 and thus extremely facilitates the assembly.

Though each stopper 18 is composed of the plate portion 20 to be in contact with the rear surface of the cover 8 and the rib portions 22 supporting the plate portion 20 in the aforementioned embodiment, the structure of the stopper is not limited thereto.

The present invention can be adopted to another protection device for occupants in various vehicles, besides a leg protection device for a front passenger of an automobile, just like the aforementioned embodiment.

### [Effects of the Invention]

As described above, the present invention can provide a vehicle occupant protection device of which the structure is simple and which can be easily assembled, and allow extremely smooth inflation of its airbag.

## Claims

1. A vehicle occupant protection device (1) comprising:
an airbag (4) disposed inside a vehicle member (2) in front of a seat of a vehicle;
a gas generator (6) for inflating the airbag (4);
a cover (8) defining a door (10) which covers the airbag (4) and is disposed to be substantially flush with said vehicle member (2) and which opens toward a vehicle occupant with its one side functioning as a hinge member when the airbag (4) is inflated so as to produce an opening in said vehicle member (2) through which the airbag (4) passes; and
a limiting means composed of stoppers (18) for limiting the opening angle of the door (10),
**characterized in that**
said stoppers (18) are disposed on side wall portions (16) of said door (10) extending in a direction perpendicular to the hinge portion of said door (10) such that they come in contact with rear surfaces of edge portions of said cover (8) around said door (10) near the peripheral edge of said opening when said door (10) is opened by a predetermined angle.

2. A vehicle occupant protection device (1) as claimed in claim 1, wherein each of said stoppers (18) comprises
a plate portion (20) which projects laterally from one of said side wall portions (16) of said door (10) and can come in contact with the rear surface of the edge portion of said cover (8) near the peripheral edge of said opening; and a rib portion (22) supporting the plate portion (20).

3. A vehicle occupant protection device (1) as claimed in claim 1 or 2, wherein the device (1) is a leg protection device for protecting a vehicle occupant's legs by the inflated airbag (4).

## Patentansprüche

1. Fahrzeuginsassenschutzvorrichtung (1) umfassend:
einen Airbag (4), welcher innerhalb eines Fahrzeugteils (2) vor einem Sitz eines Fahrzeugs angeordnet ist;
einen Gaserzeuger (6) zum Aufblasen des Airbags (4);
eine Abdeckung (8), welche eine Tür (10) definiert, die den Airbag (4) abdeckt, im Wesentlichen bündig mit dem Fahrzeugteil (2) angeordnet ist und sich zu einem Fahrzeuginsassen hin öffnet, wobei ihre eine Seite als ein Gelenkteil fungiert, wenn der Airbag (4) aufgeblasen wird, um so eine Öffnung in dem Fahrzeugteil (2) zu erzeugen, durch welche der Airbag (4) passiert; und
Begrenzungsmittel, welche durch Stopper (18) zum Begrenzen des Öffnungswinkels der Tür (10) gebildet sind,
**dadurch gekennzeichnet,**
**dass** die Stopper (18) an Seitenwandabschnitten (16) der Tür (10) angeordnet sind und sich in einer Richtung senkrecht zu dem Gelenkabschnitt der Tür (10) derart erstrecken, dass sie in Kontakt mit rückseitigen Oberflächen von Kantenabschnitten der Abdeckung (8) um die Tür (10) in der Nähe der Umfangskante der Öffnung herum in Berührung kommen, wenn die Tür (10) um einen vorbestimmten Winkel geöffnet ist.

2. Fahrzeuginsassenschutzvorrichtung (1) nach Anspruch 1, wobei jeder der Stopper (18) umfasst
einen Plattenabschnitt (20), welcher seitlich von einem der Seitenwandabschnitte (16) der Tür (10) hervorragt und mit der rückseitigen Oberfläche des Kantenabschnitts der Abdeckung (8) in der Nähe der Umfangskante der Öffnung in Berührung kommt; und
einen Rippenabschnitt (22), welcher den Plattenabschnitt (20) hält.

3. Fahrzeuginsassenschutzvorrichtung (1) nach Anspruch 1 oder 2, wobei die Vorrichtung (1) eine Beinschutzvorrichtung zum Schutz von Beinen eines Fahrzeuginsassen durch den aufgeblasenen Airbag (4) ist.

## Revendications

1. Dispositif de protection pour passager de véhicule (1), comprenant:
un coussin gonflable (4) disposé à l'intérieur d'un élément de véhicule (2) devant un siège de véhicule;
un générateur de gaz (6) destiné à gonfler le coussin gonflable (4);
un couvercle (8) définissant une porte (10) qui recouvre le coussin gonflable (4) et est disposé pour se trouver sensiblement aligné avec ledit élément de véhicule (2), et qui s'ouvre vers un passager de véhicule avec un de ses côtés fonctionnant comme un élément de charnière lorsque le coussin gonflable (4) est gonflé de façon à produire dans ledit élément de véhicule (2) une ouverture à travers laquelle passe le coussin gonflable (4); et
un moyen de limitation composé de butées (18), destiné à limiter l'angle d'ouverture de la porte (10),
**caractérisé en ce que**
lesdites butées (18) sont disposées sur des parties de paroi latérale (16) de ladite porte (10) dans une direction perpendiculaire à la partie de charnière de ladite porte (10), de telle sorte qu'elles viennent en contact avec les surfaces arrière des parties de bord dudit couvercle (8) près du bord périphérique de ladite ouverture lorsque ladite porte (10) est ouverte d'un angle prédéterminé.

2. Dispositif de protection pour passager de véhicule (1) selon la revendication 1, dans lequel chacune desdites butées (18) comprend
une partie de plaque (20) qui dépasse latéralement de l'une desdites parties de paroi latérale (16) de ladite porte (10), et peut venir en contact avec la surface arrière de la partie de bord dudit couvercle (8) près du bord périphérique de ladite ouverture; et
une partie de nervure (22) supportant la partie de plaque (20).

3. Dispositif de protection pour passager de véhicule (1) selon les revendications 1 ou 2, dans lequel le dispositif (1) est un dispositif de protection destiné à protéger les jambes d'un passager de véhicule grâce au gonflement du coussin gonflable (4).
